# EUROPEAN PATENT SPECIFICATION

(11) **EP 1 455 476 B1**
(45) Date of publication and mention of the grant of the patent: **29.09.2010**
(21) Application number: 04005145.0
(22) Date of filing: 04.03.2004
(51) Int. Cl.: H04L 1/00

(54) **Adaptive modulation transmission system, transmission device, and method thereof**
Übertragungssystem mit adaptiver Modulation, Sendevorrichtung und Verfahren dafür
Système de transmission avec modulation adaptative, appareil de transmission et méthode associée

(30) Priority: 05.03.2003 JP 2003057954
(43) Date of publication of application: 08.09.2004
(73) Proprietor: FUJITSU LIMITED, Kawasaki-shi, Kanagawa 211-8588 (JP)
(72) Inventor: Tanaka, Yoshinori, Kawasaki-shi Kanagawa 211-8588 (JP); Seki, Hiroyuki, Kawasaki-shi Kanagawa 211-8588 (JP); Takeo, Kouji, Kawasaki-shi Kanagawa 211-0041 (JP)
(74) Representative: HOFFMANN EITLE

(56) References cited:
- EP-A1- 1 229 678
- WO-A-02/060073
- WO-A-03/001681

## Description

### BACKGROUND OF THE INVENTION

### 1. Field of the Invention

The present invention relates to an adaptive modulation transmission system able to control a combination of modulation parameters of a modulation scheme and a code multiplicity for optimum data transmission according to propagation path conditions and user requirements, and a method thereof.

### 2. Description of the Related Art

A mobile communication system is required to perform communications efficiently while satisfying various requirements in transmission qualities and transmission rates, and packet transmission is suitable for this requirement. For example, in a mobile communication system, it is required to transmit a large amount of data efficiently in a downlink transmission, that is, data transmission from a base station to a mobile station. Meanwhile, because the packet transmission transmits data packets only when necessary, it enables many users to share one transmission channel, and therefore, enables effective usage of radio resources.

Higher efficiency of data transmission is obtainable by applying techniques of adaptive modulation, scheduler, repeat transmission, or others. Because the condition of the radio propagation path changes frequently, it is desirable that the transmission method fit the frequently-changing condition. For example, in the well-known transmission power control, the transmission power is increased when the propagation path condition deteriorates so as to ensure a certain reception quality or a certain reception level at the receiver side. In the meantime, interference characteristics with other receivers or adjacent cells change. Alternatively, modulation parameters, such as a modulation scheme, a coding rate, and a spreading factor (also called process gain), may also be adjusted to fit the propagation path condition with the transmission power being fixed. This is called "adaptive modulation/demodulation".

Generally, transmission data are modulated by various multi-level modulation schemes, and are encoded by error correction coding. Usually, a larger amount of data can be transmitted with more modulation levels and higher coding rate in the error correction coding; meanwhile, a resistance against transmission errors degrades. As a solution to this problem, it is suggested that the number of modulation levels be set large and the coding rate be set higher to increase the amount of transmission data and transmission throughput when the propagation path condition is good. To the contrary, it is suggested that the number of the modulation levels be set small and the coding rate be set low to reduce the amount of transmission data and prevent an increase of the transmission error rate when the propagation path condition deteriorates.

In adaptive modulation, because data transmission is controlled to fit the propagation path condition, it is necessary to determine the propagation path condition during data transmission. For example, in a TDD (Time Division Duplex) system, because the frequencies in the uplink and downlink transmission are equal, the propagation path conditions of the uplink and downlink transmission can be regarded as the same. Therefore, for example, when the propagation path quality is measured at a base station by detecting signals from a mobile station (that is, uplink propagation path quality), this result can also be used as the downlink propagation path quality.

In an FDD (Frequency Division Duplex) system, since the frequencies in the uplink and downlink transmission are different, the propagation path conditions of the uplink and downlink transmission are different, too. Therefore, as is known, a device is installed for transmitting the propagation path quality measured at a mobile station to the base station and for recognizing the uplink and downlink propagation qualities. In this case, because there is a time delay between the measurement of the propagation path quality at the mobile station and the notification of the propagation path quality to the base station, the measured propagation path quality may differ from the present propagation path quality. To solve this problem, it is proposed to predict the present propagation path quality based on the measured propagation path quality. For example, optimum modulation parameters may be assigned based on the measured propagation path quality.

Usually, the number of modulation levels and coding rate are often used as the modulation parameters. In a CDMA (Code Division Multiple Access) system, or other systems involving data spreading, the spreading factor (that is, the process gain) is also used as a modulation parameter.

By adjusting these modulation parameters to fit the propagation path condition, data transmission appropriate to the propagation path condition can be realized, and this decreases the transmission error rate, therefore realizing highly efficient data transmission.

For example, Japanese Laid Open Patent Application No. 11-298369, and "The Evolution of WCDMA Towards Higher Speed Downlink Packet Data Access" by S. Parkuall et al, IEEE VTC 2001-Spring disclose a background art of the present invention.

It is known that the amount of transmission data can be increased by assigning a number of channels to one user. For example, a number of frequency channels or code channels can be assigned in this way. Specifically, in CDMA, generally a number of code channels are assigned to each user, which is called multiple code transmission. In the multiple code transmission, if two codes are assigned to one user, the amount of transmission data can be increased by a factor of two. Further, by using codes orthogonal to the assigned codes, orthogonality between codes is obtainable, and this suppresses interference between codes. Further, when a number of codes are multiplexed, the transmission power is increased by a factor equaling the code multiplicity. For example, if two codes are multiplexed, the transmission power is increased by a factor of two, when compared with the transmission power without code multiplexing.

In the adaptive modulation, involving changing modulation parameters according to the propagation path condition, if the code multiplicity is also adaptively controlled in combination with the modulation parameters, it is possible to more flexibly control the amount of transmission data. However, in practice, when the multiple code modulation transmission is adopted, even when codes orthogonal to the multiple codes are used, for example, because of existence of multi-path in the propagation path, the orthogonal nature of codes may collapse, and interference may occur between codes.

In this way, if interference between codes occurs due to an increase of the code multiplicity, the quality of the received signals declines, and as a result, a higher propagation path quality becomes necessary. The level of the signal quality declination depends on the code multiplicity, and it is larger when the code multiplicity is larger.

Because the propagation path quality depends on the code multiplicity, and the code multiplicity changes, or the code multiplicities of different users differ from each other, when selecting the optimum modulation parameters according to the propagation path condition in the multiple code adaptive modulation, it is difficult to select the optimum modulation parameters.

WO03/001681 discloses an algorithm for optimizing channelization and modulation and coding scheme according to the prior art.

### SUMMARY OF THE INVENTION

Accordingly, it is an object of the present invention to solve one or more of the problems of the related art.

It is a more specific object of the present invention to provide an adaptive modulation transmission system able to select a combination of optimum modulation parameters and a code multiplicity according to a propagation path condition, and a method thereof.
The object is achieved by the subject-matter of the independent claims. Advantageous embodiments are defined in the dependent claims. Further examples are provided for facilitating the understanding of the invention.

According to a first example, there is provided an adaptive modulation transmission system including a transmission device and a reception device for changing a modulation parameter according to a propagation path quality between the transmission device and.the reception device and changing a code multiplicity according to an amount of a data to be transmitted from the transmission device to the receptiondevice. The transmission device comprises a signal modulation unit configured to modulate the data according to the modulation parameter, a code multiplexing unit configured to perform code multiplexing according to the code multiplicity, a code multiplexing controller configured to select the code multiplicity according to a predetermined value of the amount of the data to be transmitted, and an adaptive modulation controller configured to set a threshold of the propagation path quality for defining a region of the propagation path quality to which a combination of the modulation parameter and the code multiplicity is applicable, compare the threshold with the propagation path quality, select the combination of the modulation parameter and the code multiplicity based on a result of the comparison, and output the selected modulation parameter to the signal modulation unit.

As an embodiment, the reception device comprises a measurement unit configured to measure the propagation path quality, and a transmission unit configured to transmit the measured propagation path quality to the transmission device for the comparison.

As an embodiment, the adaptive modulation controller arranges a plurality of combinations of the modulation parameter and the code multiplicity into a group with the group of combinations of the modulation parameter and the code multiplicity being able to maintain the predetermined value of the amount of the data to be transmitted, sets a plurality of thresholds for switching between the combinations of the modulation parameter and the code multiplicity belonging to the group, compares the thresholds with the propagation path quality, and selects one of the combinations of the modulation parameter and the code multiplicity belonging to the group based on the comparison result.

According to a second example , there is provided an adaptive modulation transmission method for changing a modulation parameter according to a propagation path quality between a transmission device and a reception device and changing a code multiplicity according to an amount of a data to be transmitted from the transmission device to the reception device. The adaptive modulation transmission method includes the steps of setting a threshold of the propagation path quality for defining a region of the propagation path quality to which a combination of the modulation parameter and the code multiplicity is applicable, comparing the threshold with the propagation path quality, selecting the combination of the modulation parameter and the code multiplicity based on the comparison result, and modulating the data according to the selected modulation parameter and performing code multiplexing according to the selected code multiplicity.

As an embodiment, the adaptive modulation transmission method further comprises the steps of measuring, by the reception device, the propagation path quality, and transmitting, by the reception device, the measured propagation path quality to the transmission device for the comparison.

As an embodiment, the adaptive modulation transmission method further comprises the steps of arranging a plurality of combinations of the modulation parameter and the code multiplicity into a group with the group of the combinations of the modulation parameter and the code multiplicity being capable of maintaining a predetermined value of the amount of the data to be transmitted; comparing the thresholds with the propagation path quality; and selecting one of the combinations of the modulation parameter and the code multiplicity belonging to the group based on the comparison result.

As an embodiment, the adaptive modulation transmission method further comprises the steps of arranging a plurality of combinations of the modulation parameter and the code multiplicity into a plurality of groups; selecting one of the groups in correspondence to a predetermined value of the amount of the data to be transmitted; comparing a threshold for said one of the groups and the propagation path quality; and selecting one of the combinations of the modulation parameter and the code multiplicity belonging to said one of the groups based on the comparison result.

As an embodiment, the adaptive modulation transmission method further comprises the steps of arranging a plurality of combinations of the modulation parameter and the code multiplicity into a plurality of groups; selecting one of the groups in correspondence to a predetermined value of an interference level or a predetermined value of the amount of the data to be transmitted; comparing a threshold for said one of the groups and the propagation path quality; and selecting one of the combinations of the modulation parameter and the code multiplicity belonging to said one of the groups based on the comparison result.

As an embodiment, the adaptive modulation transmission method further comprises the steps of setting a threshold of the propagation path quality for defining a region of the propagation path quality to which a combination of the modulation parameter and the code multiplicity is applicable; setting an auxiliary threshold of the propagation path quality in the region related to said threshold; and increasing the code multiplicity without changing a transmission power level when the auxiliary threshold exceeds the propagation path quality.

As an embodiment, the adaptive modulation transmission method further comprises the steps of setting a group of a plurality of combinations of the modulation parameter and the code multiplicity, said group of the combinations of the modulation parameter and the code multiplicity resulting in a maximum of a throughput; setting a threshold for defining a region of the propagation path quality in which the combinations of the modulation parameter and the code multiplicity belonging to the group are applicable; comparing the threshold and the propagation path quality; and selecting one of the combinations of the modulation parameter and the code multiplicity belonging to the group based on the comparison result with a transmission power level to be a constant.

According to a third example, there is provided a transmission device capable of changing a modulation parameter according to a propagation path quality between the transmission device and a reception device and changing a code multiplicity according to an amount of a data to be transmitted from the transmission device to the reception device. The transmission device comprises a signal modulation unit configured to modulate the data according to the modulation parameter; a code multiplexing unit configured to perform code multiplexing according to the code multiplicity; a code multiplexing controller configured to select the code multiplicity according to a predetermined value of the amount of the data to be transmitted; and an adaptive modulation controller configured to set a threshold of the propagation path quality for defining a region of the propagation path quality to which a combination of the modulation parameter and the code multiplicity is applicable, compare the threshold with the propagation path quality, select the combination of the modulation parameter and the code multiplicity based on the comparison result, and output the selected modulation parameter to the signal modulation unit.

According to a fourth example, there is provided a reception device for receiving data transmitted from a transmission device for changing a modulation parameter according to a propagation path quality between the transmission device and the reception device and changing a code multiplicity according to an amount of a data to be transmitted from the transmission device to the reception device. The reception device comprises a measurement unit configured to measure the propagation path quality; and a transmission unit configured to transmit the measured propagation path quality to the transmission device.

According to the present invention, a threshold is set to define a region of the propagation path quality to which a combination of a modulation parameter and a code multiplicity is applicable, and the most appropriate combination of the modulation parameters and the code multiplicity is selected based on the propagation path quality and a user requirement. Therefore, even when the propagation path condition changes between a transmission device and a reception device, the radio resources can be effectively utilized, and the transmission rate required by the user can be satisfied.

These and other objects, features, and advantages of the present invention will become more apparent from the following detailed description of the preferred embodiments given with reference to the accompanying drawings.

### BRIEF DESCRIPTION OF THE DRAWINGS

FIG. 1 is a block diagram showing a configuration of a principal portion of an adaptive modulation transmission system according to an embodiment of the present invention;
FIG. 2A shows graphs depicting the relation between a packet reception success probability and SIR;
FIG. 2B shows graphs depicting the relation between a throughput and SIR;
FIG. 3 is a graph for explaining thresholds of SIR according to the present invention;
FIGS. 4A and 4B are graphs showing a relation between the packet reception success probability and the code multiplicity;
FIG. 5 shows graphs depicting the relation of the code multiplicity, the modulation parameters, and the threshold according to the present embodiment;
FIG. 6 is a table showing an example of a relation between the threshold and the transmission rate;
FIG. 7A is a block diagram for explaining an example of the data modulation section of the transmission device 1 shown in FIG. 1;
FIG. 7B is a block diagram showing an example of a configuration of the adaptive modulation controller 11;
FIGS. 8A and 8B are block diagrams showing the procedures of determining modulation parameters MCS;
FIG. 9 shows graphs presenting another example of the relation between the code multiplicity and the threshold according to the present embodiment;
FIG. 10 shows graphs presenting another example of the relation between the code multiplicity and the threshold according to the present embodiment;
FIG. 11A is a block diagram for explaining another example of the data modulation section of the transmission device 1 shown in FIG. 1;
FIG. 11B is a block diagram showing another example of a configuration of the adaptive modulation controller 11;
FIG. 12 shows graphs presenting another example of the combination of the adaptive modulation parameters and the adaptive code multiplicities according to the present embodiment;
FIG. 13 is a block diagram showing another example of the data modulation section of the transmission device 1 shown in FIG. 1;
FIG. 14 is a block diagram showing another example of the data modulation section of the transmission device 1 shown in FIG. 1;
FIG. 15 is a block diagram showing another example of the data modulation section of the transmission device 1 shown in FIG. 1;
FIG. 16 shows a graph presenting an example of improving the throughput in accordance with SIR with the transmission power to be a constant;
FIG. 17 is a block diagram showing another example of a configuration of the adaptive modulation controller 11; and
FIG. 18 shows graphs presenting an example of the characteristics of the throughput when the code multiplicity is changed with transmission power to be a constant.

### DESCRIPTION OF THE PREFERRED EMBODIMENTS.

Below, preferred embodiments of the present invention are explained with reference to the accompanying drawings.

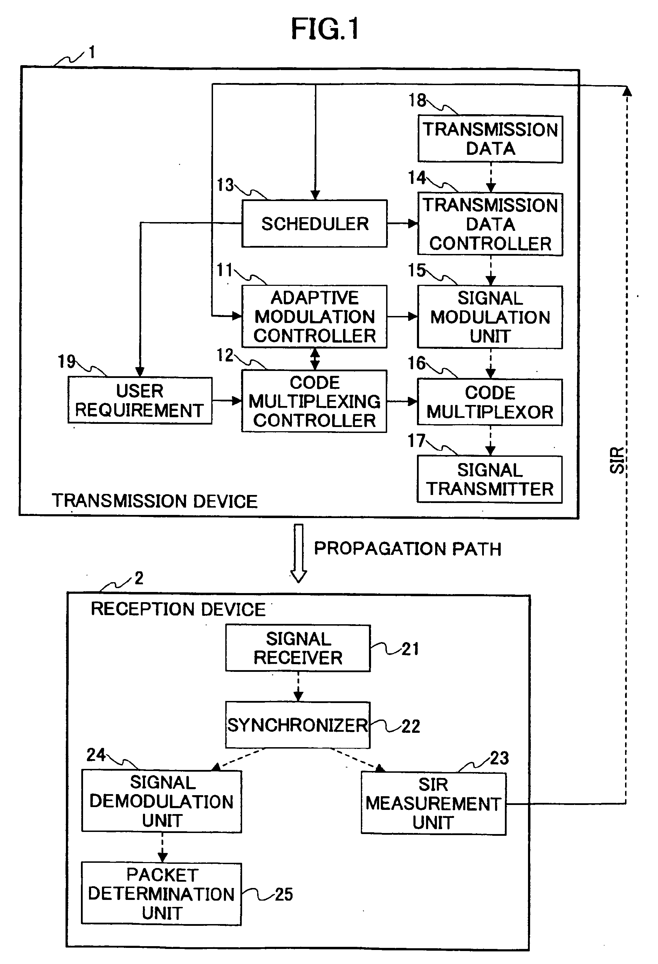

FIG. 1 is a block diagram showing a configuration of a principal portion of an adaptive modulation transmission system according to an embodiment of the present invention.

The adaptive modulation transmission system shown in FIG. 1 includes a transmission device 1, and a reception device 2. For example, the transmission device 1 may be a base station, and the reception device 2 may be a mobile station.

The transmission device 1 includes an adaptive modulation controller 11, a code multiplexing controller 12, a scheduler 13, a transmission data controller 14, a signal modulation unit 15, a code multiplexer 16, and a signal transmitter 17. The reference number 18 represents transmission data.

The reception device 2 includes a signal receiver 21, a synchronizer 22, an SIR measurement unit 23, a signal demodulation unit 24, and a packet determination unit 25. Here, SIR is the abbreviation of "Signal to Interference Power Ratio", indicating a ratio of the power level of the target wave over the power level of the interfering wave.

In FIG. 1, the arrows each having a dashed line indicate the signal transmission paths inside the transmission device 1 and the reception device 2. The transmission device 1 and the reception device 2 communicate with each other through a radio propagation path, for example, by means of FDD. The transmission device 1 and the reception device 2 combine an adaptive modulation scheme and a multiple code transmission scheme, and optimize the combination of modulation parameters and a code multiplicity according to the propagation path quality between the transmission device 1 and the reception device 2. In the transmission device 1, the adaptive modulation controller 11, the code multiplexing controller 12, the signal modulation unit 15, and the code multiplexer 16 form a data modulation section of the transmission device 1.

As mentioned above, the transmission device 1 and the reception device 2 selects the combination of the optimum modulation parameters and the optimum code multiplicity according to the propagation path quality between the transmission device 1 and the reception device 2. In this embodiment, the propagation path quality measured at the reception device 2 is transmitted to the transmission device 1. Signals from the transmission device 1 are received by the signal receiver 21 in the reception device 2, the signals are synchronized in the synchronizer 22, and then supplied to the SIR measurement unit 23 and the signal demodulation unit 24. The signals demodulated in the signal demodulation unit 24 are processed in the packet determination unit 25. This is called "data reception process". The SIR measurement unit 23 measures the ratio of the power level of the target wave signal over the power level of the interfering wave signal related to the propagation path between the transmission device 1 and the reception device 2, and transmits the measured SIR result as the measured propagation path quality to the transmission device 1 through an uplink control channel. In a TDD system, the transmission device 1 may receive signals from the reception device 2 by a not-illustrated signal receiver, and measure the propagation path quality from the received signals.

In the present embodiment, the value of SIR measured from the signals received by the not-illustrated signal receiver of the transmission device 1 is input to the adaptive modulation controller 11 and the scheduler 13.

According to the transmission rate required by the user (this user requirement is denoted by the reference number 19), a code multiplicity is input to the adaptive modulation controller 11 and the code multiplexer 16 from the code multiplexing controller 12. The adaptive modulation controller 11 sets a threshold defining a region to which the combination of the modulation parameters (such as QPSK, 16QAM, or other modulation schemes, coding rate in the error correction coding, code spreading factor, and so on) and the code multiplicity is applicable. The adaptive modulation controller 11 compares the threshold with SIR, and selects a combination of the modulation parameters and the code multiplicity, and the modulation parameters of the selected combination is input to the signal modulation unit 15.

The transmission data 18 are processed by the transmission data controller 14, the signal modulation unit 15, and the code multiplexer 16, and are transmitted to the signal transmitter 17. In this process, the signal modulation unit 15 modulates the data according to the modulation parameters, and the code multiplexer 16 multiplexes a number of codes according to the code multiplicity given by the code multiplexing controller 12, and the resultant signals are output to the radio propagation path via the signal transmitter 17.

The scheduler 13 determines the packet transmission sequence or timing, or determines the user who transmits the packets. For example, in order for the scheduler 13 to assign more packets to a user or a time period which is in good propagation path condition, usually, SIR is used to represent the propagation path quality.

The transmission data 18 are stored temporarily in a buffer in the transmission data controller 14, and are transferred to the signal modulation unit 15 and the code multiplexer 16 by the user determined by the scheduler 13, or at the time period determined by the scheduler 13 to complete the transmission process. That is, the data are processed by the adaptive modulation controller 11 and the code multiplexing controller 12 according to the requirement of the user determined by the scheduler 13.

The adaptive modulation controller 11 determines the modulation parameters based on the user requirement or the value of SIR used to represent the propagation path quality. According to the modulation parameters, the signal modulation unit 15 performs QPSK modulation or multi-level orthogonal modulation. The code multiplexing controller 12 determines the code multiplicity mainly based on the user requirement 19. The code multiplexing controller 12 multiplexes a number of codes equaling the code multiplicity.

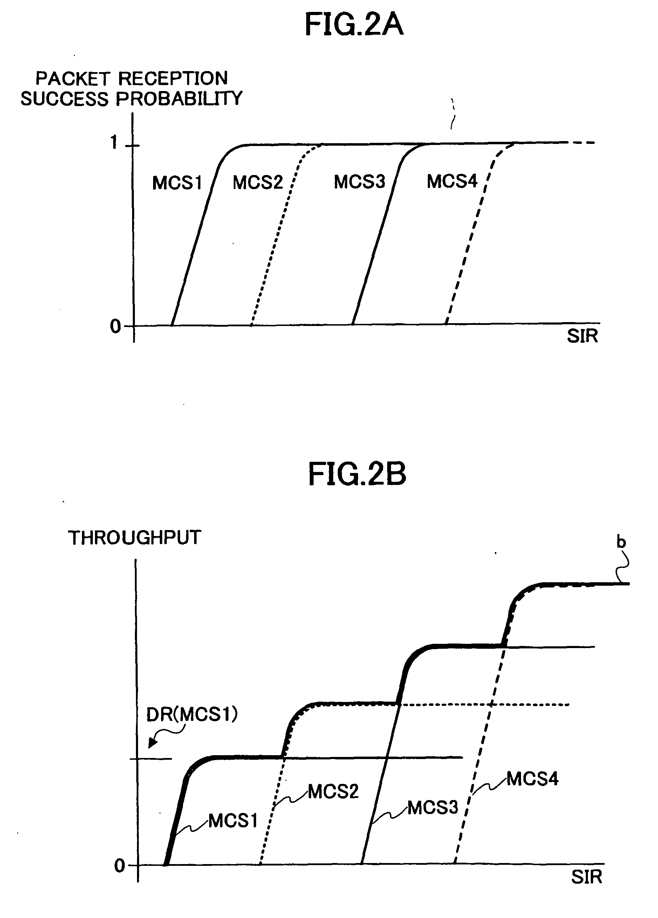

FIG. 2A shows graphs depicting the relation between a packet reception success probability and SIR, and FIG. 2B shows graphs depicting the relation between a throughput and SIR.

In FIG. 2A, the abscissa represents SIR, used to indicate the propagation path quality, and the ordinate represents the packet reception success probability. In FIG. 2B, the abscissa represents SIR, and the ordinate represents the throughput. In both FIG. 2A and FIG. 2B, MCS (Modulation and Coding Scheme) represents a combination of a modulation scheme (QPSK, or 16QAM, and so on) and a coding rate, that is, the modulation parameters. Further, MCS1, MCS2, MCS3, and MCS4 represent four sets of modulation parameters, and these modulation parameters result in four transmission rates which increase according to the same order as MCS1 < MCS2 < MCS3 < MCS4. The throughput represents the amount of transmission data normally demodulated in the reception device 2.

For example, with the present propagation path quality SIR, if modulation parameters MCS resulting in a high transmission rate are assigned, specifically, the modulation parameters of 16QAM modulation are assigned, which corresponds to a transmission rate higher than that of the QPSK modulation, the packet reception success probability decreases. To the contrary, if modulation parameters MCS resulting in a low transmission rate are assigned, the packet reception success probability reaches to 100%, but in this case, because the transmission rate is lower than the possible maximum transmission rate under the present propagation path condition, the radio resources cannot be utilized efficiently.

Therefore, it is necessary to select appropriate modulation parameters MCS according to the propagation path condition.

If the transmission rate is represented by DR, and the throughput is represented by TP, then TP can be expressed by TP = DR x (packet reception success probability). In FIG. 2B, it is assumed that the transmission rate corresponding to the modulation parameters MCS1 is DR, the transmission rate corresponding to the modulation parameters MCS2 is 1.5 times DR, the transmission rate corresponding to the modulation parameters MCS3 is 2 times DR, and the transmission rate corresponding to modulation parameters MCS4 is 2.5 times DR. Because the packet reception success probability depends on SIR, the throughput depends on SIR, too. Therefore, as illustrated by the curve b, the modulation parameters MCS resulting in the maximum throughput are selected.

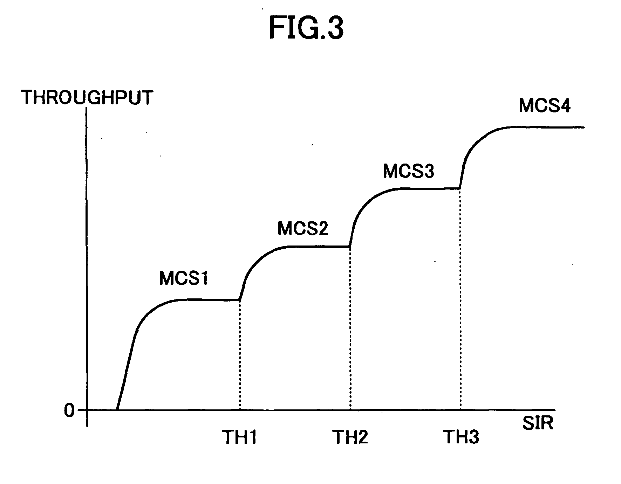

FIG. 3 is a graph for explaining thresholds of SIR according to the present invention. In FIG. 3, the abscissa represents SIR, and the ordinate represents the throughput.

As shown in FIG. 3, in order to select the modulation parameters MCS1, MCS2, MCS3, or MCS4, thresholds TH1, TH2, and TH3 are set respectively, and the measured SIR is compared with these thresholds.

Below, the thresholds TH1, TH2, and TH3 are assumed to be ideal ones. Then, for example, when the measured SIR is less than the threshold TH1, the modulation parameters MCS1 are assigned. This improves the propagation path quality SIR. When the measured SIR exceeds the threshold TH1, the modulation parameters MCS2 are assigned. This increases the transmission rate and further improves the propagation path condition SIR. When the measured SIR exceeds the threshold TH2, the modulation parameters MCS3 are assigned and the transmission rate is further increased and the propagation path condition SIR is further improved.

It is possible to set the thresholds taking into consideration conditions such as delay of the SIR measurement and a large change of the propagation path condition. For example, in an environment where the propagation path condition changes rapidly, the difference between the measured SIR and the current SIR is large. Thus, it may be difficult to assign the most appropriate modulation parameters MCS. In this case, the threshold can be set relatively high, and this can reduce the probability of a packet reception failure.

In a packet reception and repeat control system, because a small number of packet reception failures are tolerable, the threshold can be set relatively low, allowing transmission at a high transmission rate. To the contrary, in transmission services, in which real time data transmission is important, the threshold can be set relatively high to prevent the packet reception failure and therefore the repeat processing.

The thresholds can be set or adjusted taking into consideration the measurement results of the packet reception success probability.

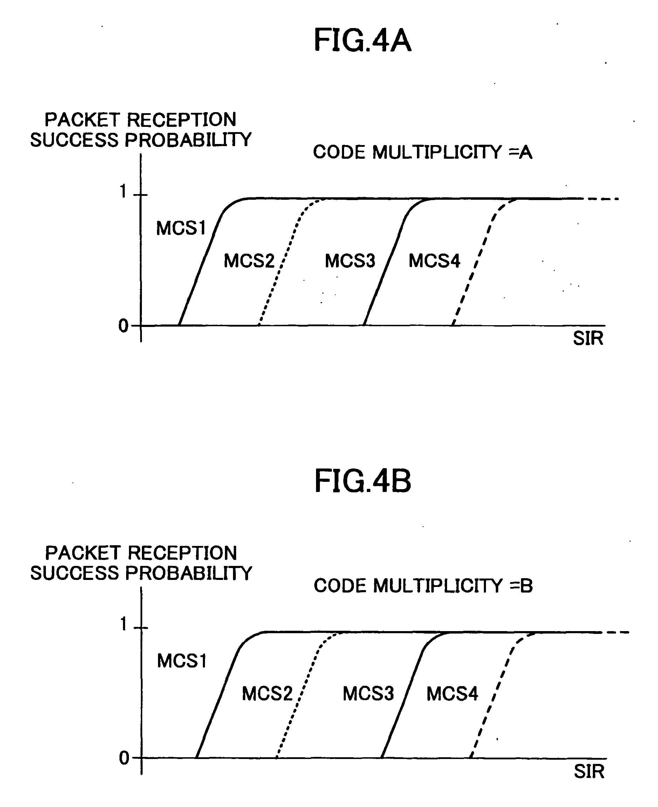

FIGS. 4A and 4B are graphs showing a relation between the packet reception success probability, the modulation parameters MCS and a code multiplicity.

In FIGS. 4A and 4B, the abscissa represents SIR, and the ordinate represents the packet reception success probability, and it is assumed that the code multiplicity A is less than the code multiplicity B.

When multiple codes are used, if the codes are orthogonalized, ideally interference between codes does not occur. However, because of the existence of the multi-path, code-orthogonality collapses, and interference occurs between codes. Due to an increase of the interference, or in order to obtain a high packet reception success probability, the required SIR should be large. For example, if the threshold of SIR corresponding to the code multiplicity A is used to change the modulation parameters MCS corresponding to the code multiplicity B, it is difficult to select the optimum modulation parameters MCS. In other words, the threshold of SIR for assigning the optimum modulation parameters MCS should be changed according to the code multiplicity.

Therefore, in the present embodiment, the threshold of SIR is set in correspondence to the combination of the code multiplicity and the adaptive modulation parameters MCS.

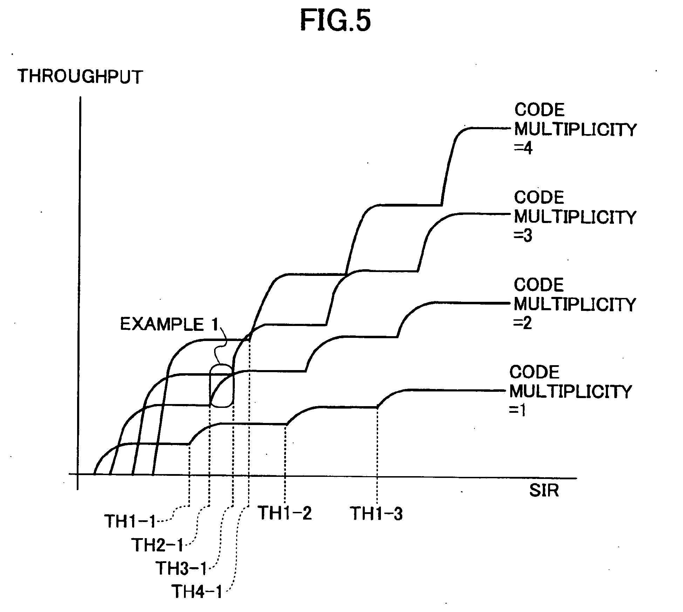

FIG. 5 shows graphs depicting an example of the relation of the code multiplicity, the modulation parameters, and the threshold according to the present embodiment. In FIG. 5, the abscissa represents SIR, and the ordinate represents the throughput.

In FIG. 5, thresholds TH1-1, TH2-1, TH3-1, TH4-1, TH1-2, TH1-3, and so on, are set, which determine the regions respectively corresponding to the combinations of the modulation parameters MCS1 through MCS4 and the code multiplicity of 1 through the code multiplicity of 4. In FIG. 5, it is assumed that the transmission rate corresponding to the modulation parameters MCS2 is 1.5 times that corresponding to the modulation parameters MCS1, the transmission rate corresponding to the modulation parameters MCS3 is 2 times that corresponding to the modulation parameters MCS1, and the transmission rate corresponding to the modulation parameters MCS4 is 2..5 times that corresponding to the modulation parameters MCS1. Further, if the transmission rate corresponding to the combination of the modulation parameters MCS1 and the code multiplicity of 1 is used as a reference, the transmission rate corresponding to the combination of the modulation parameters MCS3 and the code multiplicity of 2 is four times the reference transmission rate.

When the code multiplicity is large, the necessary SIR becomes high accordingly. For example, when the code multiplicity is 1, the threshold between the modulation parameters MCS1 and the modulation parameters MCS2 is represented by TH1-1, and the threshold between the modulation parameters MCS2 and the modulation parameters MCS3 is represented by TH1-2. When the code multiplicity is 2, the threshold between the modulation parameters MCS1 and the modulation parameters MCS2 is represented by TH2-1, which is higher than TH1-1.

In this way, by using combinations of the code multiplicity and the modulation parameters, it is possible to set the most appropriate transmission rate in correspondence to the propagation path condition.

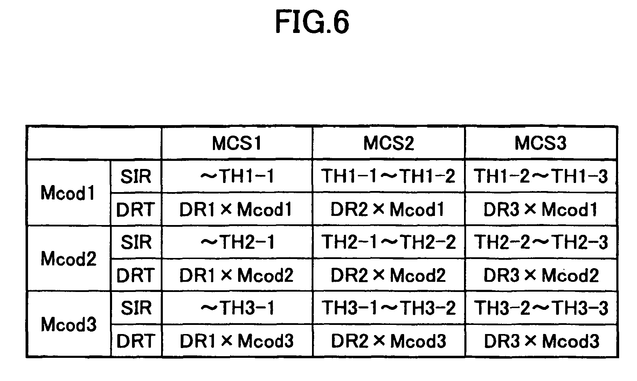

FIG. 6 is a table showing an example of a relation between the threshold and the transmission rate.

In FIG. 6, the transmission rate is represented by DRT, and transmission rates DRT and the thresholds of SIR are presented in correspondence to combinations of code multiplicities Mcod1 through Mcod3 and the modulation parameters MCS1 through MCS3. Here, Mcod1=1, Mcod2=2, and Mcod3=3.

The transmission rates corresponding to combinations of the modulation parameters MCS1 through MCS3 and the code multiplicity Mcod1 are represented by DR1 through DR3, respectively. As mentioned above, DR2=1.5*DR1, and DR3=2*DR1.

For example, as shown in FIG. 6, when SIR is above the threshold TH3-2 and below the threshold TH3-3, the combination of the modulation parameters MCS3 and the code multiplicity Mcod3 can be selected, and the corresponding transmission rate DRT equals DR3 x Mcod3 = 2 x 3 =6, that is, six times the reference transmission rate DR1.

The transmission rate corresponding to the combination of the modulation parameters MCS1 and the code multiplicity Mcod3 equals DR1 x Mcod3 = 1 x 3 = 3; the transmission rate corresponding to the combination of MCS2 and Mcod2 equals DR2 x Mcod2 = 2 x 1.5 = 3, and, accordingly, the two transmission rates are equal. Therefore, the regions of the required SIR of these two cases overlap with each other. This is indicated by "example 1" in FIG. 5. In this region, which combinations ought to be selected is determined by factors other than the transmission rate requirement. For example, if it is determined to select the combination having the smaller code multiplicity, the combination of MCS2 and Mcod2 is selected. Alternatively, if it is desired to reduce packet reception failure, the combination of MCS1 and Mcod3 can be selected.

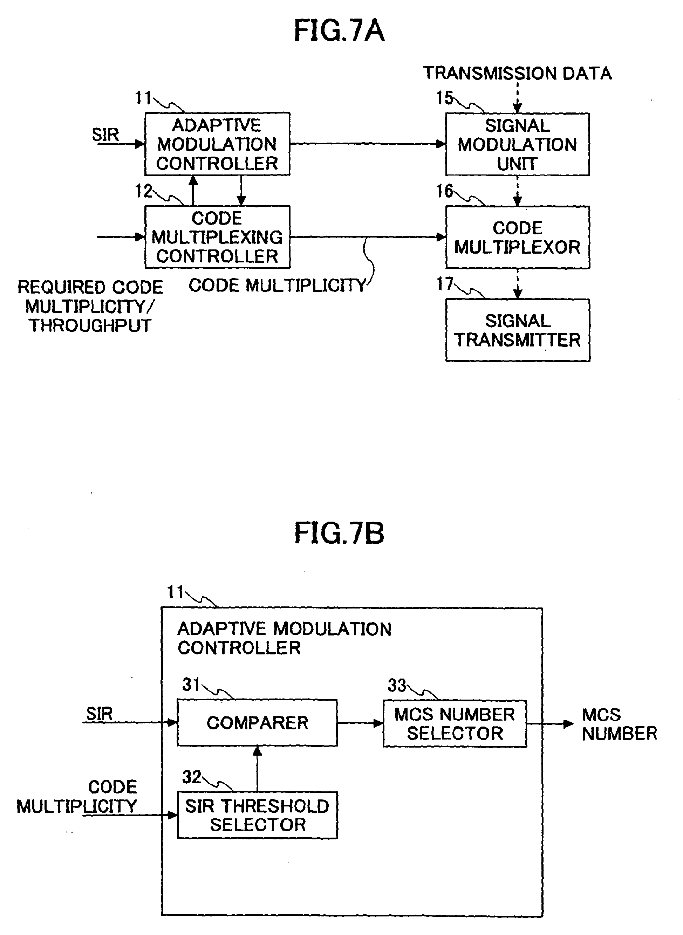

FIG. 7A is a block diagram for explaining an example of the data modulation section of the transmission device 1 shown in FIG. 1, including the adaptive modulation controller 11, the code multiplexing controller 12, the signal modulation unit 15, and the code multiplexer 16. FIG. 7B is a block diagram showing an example of a configuration of the adaptive modulation controller 11.

As shown in FIG. 7B, the adaptive modulation controller 11 includes a comparer 31, an SIR threshold selection unit 32, and an MCS number selection unit 33.

The adaptive modulation controller 11 determines the modulation parameters based on the propagation path quality SIR, and selects the modulation scheme and the coding rate in the signal modulation unit 15.

The code multiplexing controller 12 determines a code multiplicity in response to the user requirement for a code multiplicity or a throughput, or the others. If the number of codes receivable at the reception device 2 has an upper limit, the code multiplicity is determined to be less than the upper limit. The code multiplicity can also be determined from the transmission rate or the throughput required by the user. The adaptive modulation controller 11 and the code multiplexing controller 12 exchange information with each other to finally determine the modulation parameters and the code multiplicity.

As shown in FIG. 7B, in the adaptive modulation controller 11, the SIR threshold selection unit 32 selects the threshold of SIR corresponding to the code multiplicity output from the code multiplexing controller 12. The comparer 31 compares the selected threshold with the propagation path quality SIR, and thereby determines the region of SIR in which the selected combination of the modulation parameters and the code multiplicity is applicable. The MCS number selection unit 33 outputs an MCS number representing the modulation parameters included in the selected combination of the modulation parameters and the code multiplicity, and the MCS number is input to the signal modulation unit 15.

For example, the thresholds TH1-1, TH1-2, and so on, as shown in FIG. 6, corresponding to the combinations of the code multiplicity and the modulation parameters, are stored in the SIR threshold selection unit 32, and when the code multiplicity of 2 is input, the thresholds TH2-1, TH2-2, TH2-3 are selected and input to the comparer 31.

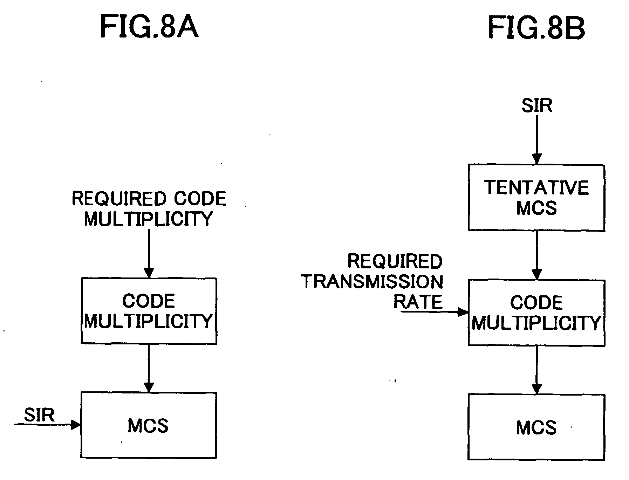

FIG. 8A and FIG. 8B are block diagrams showing the procedures of determining modulation parameters MCS.

In FIG. 8A, according to the required code multiplicity, a code multiplicity is input to the code multiplexing controller 12, and the modulation parameters MCS are determined from the propagation path quality SIR.

In FIG. 8B, when the transmission rate required by the user is notified, according to the required transmission rate, the adaptive modulation controller 11 determines tentative modulation parameters MCS according to SIR, and transmits the tentative modulation parameters MCS to the code multiplexing controller 12. The code multiplexing controller 12 determines the code multiplicity satisfying the required transmission rate based on the tentative modulation parameters MCS, and transmits the code multiplicity to the adaptive modulation controller 11. Thereby, the adaptive modulation controller 11 determines the formal modulation parameters MCS. Subsequently, the MCS number corresponding to the modulation parameter is input to the signal modulation unit 15, and the code multiplicity is input to the code multiplexer 16. By such a procedure, the transmission data are adaptively modulated according to the user requirement and the propagation path condition.

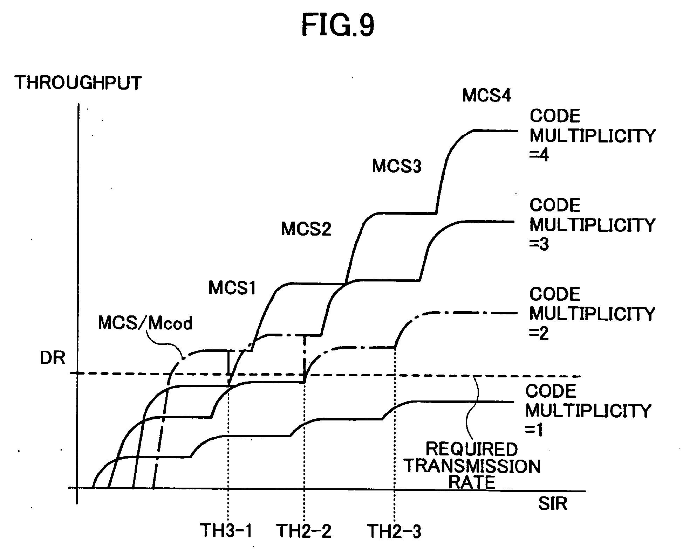

FIG. 9 shows graphs presenting another example of the relation between the code multiplicity and the threshold according to the present embodiment. In FIG. 9, the abscissa represents SIR, and the ordinate represents the throughput.

In FIG. 9, which is the same as FIG. 5, when the throughputs are dependent on combinations of the modulation parameters MCS1 through MCS4 and the code multiplicity of 1 through the code multiplicity of 4, if the user requires the transmission rate DR indicated by the dashed line, then combinations of the modulation parameters and the code multiplicity able to maintain the required transmission rate DR are assigned. In other words, when SIR is below the threshold TH3-1, the combination of the code multiplicity of 3 and the modulation parameters MCS1 are assigned, when SIR is below the threshold TH2-2, the combination of the code multiplicity of 2 and the modulation parameters MCS2 are assigned. When SIR is below the threshold TH2-3, the combination of the code multiplicity of 2 and the modulation parameters MCS3 are assigned. When SIR is above the threshold TH2-3, the combination of the code multiplicity of 2 and the modulation parameters MCS4 are assigned. Throughputs associated with these combinations are indicated by the dot-dashed lines.

Because of the change of the propagation path condition, the throughput at the receiving side may be lower than the required transmission rate DR even when the transmission rate during data transmission is higher than the required transmission rate DR. For example, below the required transmission rate DR shown by the dashed line, the throughput decreases, as shown by the dot-dashed lines in FIG. 9. However, by taking appropriate measures such as, advancing the timing of data transmission, it is possible to maintain the transmission rate to be constant.

For example, assume that the transmission rate corresponding to the combination of the code multiplicity of 1 and the modulation parameters MCS1 corresponds to 1, and the user requires a transmission rate DR corresponding to 3.5, during packet transmission to the user. If the propagation path condition deteriorates, and if the modulation parameters MCS1 are assigned, then in order to maintain the required transmission rate, a code multiplicity of 4 should be assigned.

If the modulation parameters MCS2 are assigned, which corresponds to a transmission rate 1.5 times the transmission rate associated with the modulation parameters MCS1, by using a code multiplicity of 2, the transmission rate becomes 4.5, which satisfies the required transmission rate. In this case, the threshold for switching the modulation parameters MCS1 to the modulation parameters MCS2 may be set to be TH3-1.

If the modulation parameters MCS3 are assigned, which corresponds to a transmission rate two times the transmission rate associated with the modulation parameters MCS1, by using the code multiplicity of 2, the transmission rate becomes 4, satisfying the required transmission rate.

If the propagation path condition improves, and if the modulation parameters MCS4 are assigned, which corresponds to a transmission rate 2.5 times the transmission rate associated with the modulation parameters MCS1, by using the code multiplicity of 2, the transmission rate becomes 5, satisfying the required transmission rate. In this case, either the modulation parameters MCS3 or the modulation parameters MCS4 are combined with the code multiplicity of 2, and the threshold for switching them is TH2-3.

In this way, by selecting and assigning combinations of the modulation parameters MCS and the code multiplicity Mcod, it is possible to realize data transmission at least at a transmission rate which always satisfies the required transmission rate DR.

Although SIR of the propagation path changes frequently due to fading or other reasons, SIR of the propagation path is also dependent on the user position (position of a mobile station). For example, at a mobile station (reception device 2) close to a base station (transmission device), the average SIR is high, and the probability of assigning the modulation parameters MCS4 is high. Usually, in a system in which the code multiplicity is constant, data are transmitted to a user close to the base station at a high transmission rate, and to a user far from the base station at a low transmission rate.

To solve this problem, one may, for example, try to increase the number of times of transmissions to the user who is far, but according to the above embodiment of the present invention, it is possible to transmit data at a constant transmission rate regardless of the position of the mobile station by changing the code multiplicity in correspondence to the modulation parameters MCS.

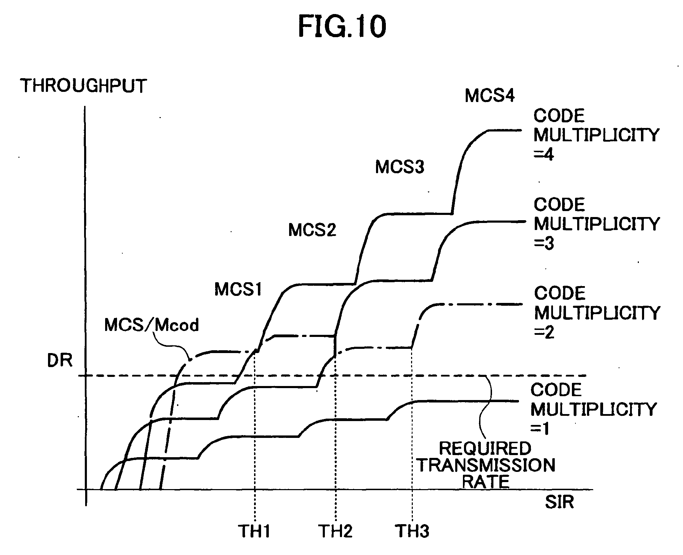

FIG. 10 shows graphs presenting another example of the relation between the code multiplicity and the threshold according to the present embodiment.

In FIG. 10, which is the same as FIG. 9, thresholds TH1, TH2, and TH3 are set when combinations of the modulation parameters MCS and the code multiplicity Mcod are assigned to obtain the transmission rate DR required by the user. In this example, the thresholds TH1 and TH2 are set relatively high compared with the thresholds TH3-1 and TH3-2 in FIG. 9. As a result, it is possible to maintain the throughput, represented by the dot-dashed lines, not to be lower than the required transmission rate DR, represented by the dashed line. In other words, by setting relatively high thresholds, it is possible to assign combinations of the modulation parameters and the code multiplicities to reduce the packet reception failure rate, and reduce the probability of throughputs lower than the required transmission rate DR, and this realizes stable data transmission.

Compared with the case shown in FIG. 9, low modulation parameters MCS and high code multiplicities Mdoc are used in the present example. Because the high code multiplicities may increase interference levels between adjacent cells, the thresholds should be set while taking into consideration the influence on the adjacent cells.

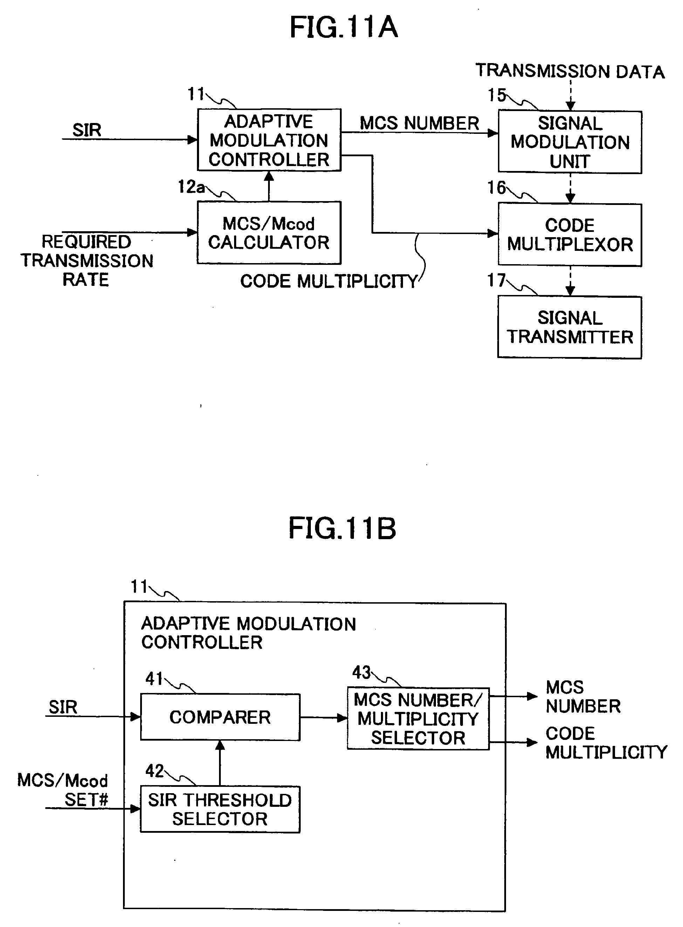

FIG. 11A is a block diagram for explaining another example of the data modulation section of the transmission device 1 shown in FIG. 1. In FIG. 11A, the same reference numbers are used for the same elements as in FIG. 1.

In FIG. 11A, the data modulation section of the transmission device 1 includes the adaptive modulation controller 11, an MCS/Mcod combination calculation unit 12a, the signal modulation unit 15, and the code multiplexer 16.

FIG. 11B is a block diagram showing another example of a configuration of the adaptive modulation controller 11.

As shown in FIG. 11B, the adaptive modulation controller 11 includes a comparer 41, an SIR threshold selection unit 42, and an MCS number/multiplicity selection unit 43.

The adaptive modulation controller 11 determines the modulation parameters based on the propagation path quality SIR, and selects the modulation scheme for modulating the transmission data in the signal modulation unit 15.

The MCS/Mcod combination calculation unit 12a selects a combination of the modulation parameter and the code multiplicity (abbreviated as MCS/Mcod combination) in correspondence to the transmission rate required by a user, and transmits the selected combination to the adaptive modulation controller 11. For example, The MCS/Mcod combination calculation unit 12a may be configured to select the MCS/Mcod combinations shown by the dot-dashed lines in FIG. 9 and FIG. 10, and transmit the selected combination to the adaptive modulation controller 11.

Based on the propagation path quality SIR and the MCS/Mcod combination transmitted from the MCS/Mcod combination calculation unit 12a, the adaptive modulation controller 11 outputs an MCS number to the signal modulation unit 15, and a code multiplicity to the code multiplexer 16, and the transmission data are modulated and are transmitted to the signal transmitter 17.

In the adaptive modulation controller 11, as shown in FIG. 11B, the SIR threshold selection unit 42 transmits the threshold associated with the MCS/Mcod combination transmitted from the MCS/Mcod combination calculation unit 12a to the comparer 41.

For example, the SIR threshold selection unit 42 selects the thresholds TH3-1, TH2-2, and TH2-3 and transmits them to the comparer 42 in order to realize the required transmission rate DR shown in FIG. 9.

The comparer 41 compares the selected thresholds with the propagation path quality SIR, and notifies the MCS number selection unit 43 of the threshold region of SIR.

The MCS number selection unit 43, for example, as shown in FIG. 9, outputs the modulation parameters MCS3 as the MCS number to the signal modulation unit 15 when SIR is above the threshold TH2-2 and below the threshold TH2-3, and outputs a code multiplicity of 2 to the code multiplexer 16.

Consequently, the signal modulation unit 15 performs modulation by a modulation scheme corresponding to the modulation parameters MCS3, and the code multiplexer 16 performs multiplexing with the code multiplicity to be two. The obtained signals are transmitted from the signal transmitter 17.

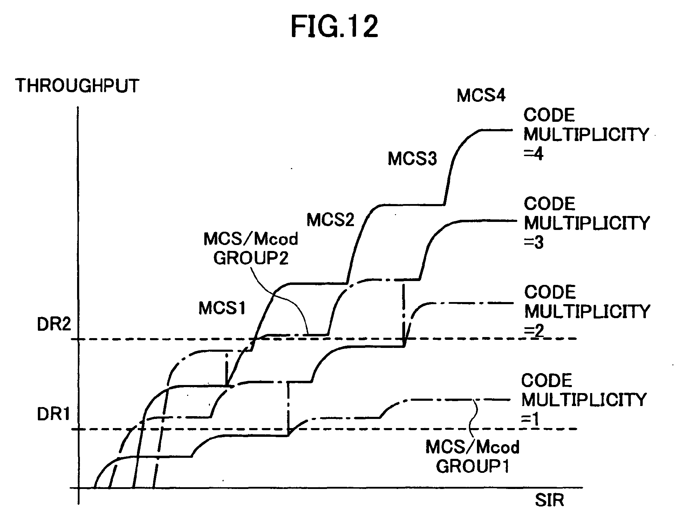

FIG. 12 shows graphs presenting another example of combinations of the adaptive modulation parameters and the adaptive code multiplicities according to the present embodiment, where the abscissa represents SIR, and the ordinate represents the throughput.

As shown in FIG. 12, there are combinations of the modulation parameters MCS1 through MCS4 and the code multiplicity of 1 through the code multiplicity of 4.

In FIG. 12, there is a first group of MCS/Mdoc combinations that result in a transmission rate not lower than the required transmission rate DR1, including combinations of the code multiplicity of 2 and the modulation parameters MCS1, the code multiplicity of 2 and the modulation parameters MCS2, the code multiplicity of 1 and the modulation parameters MCS3, the code multiplicity of 1 and the modulation parameters MCS4. There is also a second group of MCS/Mdoc combinations that result in a transmission rate not lower than the required transmission rate DR2, including combinations of the code multiplicity of 3 and the modulation parameters MCS1, the code multiplicity of 3 and the modulation parameters MCS2, the code multiplicity of 3 and the modulation parameters MCS3, the code multiplicity of 2 and the modulation parameters MCS4.

When the first group of the MCS/Mdoc combinations is assigned, one combination is selected according to SIR from the combinations of Mdoc2 and MCS1, Mdoc2 and MCS2, Mdoc1 and MCS3, and Mdoc1 and MCS4. When the second MCS/Mdoc combination group is assigned, one combination is selected according to SIR from the combinations of Mdoc4 and MCS1, Mdoc3 and MCS2, Mdoc3 and MCS3, and Mdoc2 and MCS4.

For example, if there are two users, one requires a high transmission rate DR2 (called as "high rate user" below), and another one requires a low transmission rate DR1 (called as "low rate user" below). For the high rate user, the second MCS/Mdoc combination group can be assigned, and a high throughput can be maintained. For the low rate user, the first MCS/Mdoc combination group can be assigned. Further, there may be more MCS/Mdoc combination groups, and these groups may be selected and assigned according to the user requirement.

Even for the same user, if the amount of transmission data increases with time, the user may desire to change the required transmission rate. In this case, according to a notification from the user for changing the required transmission rate, it is possible to change assignment of the MCS/Mdoc combination group. In addition, for example, when transmitting important data, it is desirable to correctly transmit the data without a time restriction. In this case, for example, the first MCS/Mdoc combination group, corresponding to a low transmission rate, can be assigned. If there is a large amount of data to be transmitted, and it is desired to transmit the data quickly, for example, the second MCS/Mdoc combination group, corresponding to a high transmission rate, can be assigned.

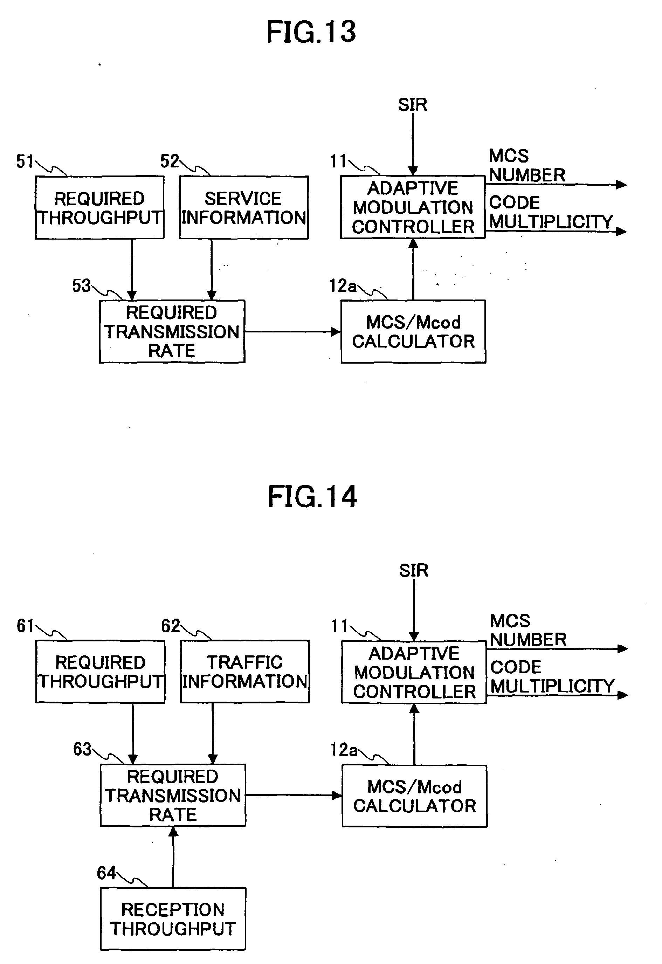

FIG. 13 is a block diagram showing another example of the data modulation section of the transmission device 1 shown in FIG. 1, including the adaptive modulation controller 11 and the MCS/Mcod combination calculation unit 12a.

In FIG. 13, the required transmission rate 53 is calculated based on a throughput 51 required by a user and information 52 of service for the user. The user-required throughput 51 and the user service information 52 correspond to the user requirement 19 shown in FIG. 1. The thus obtained required transmission rate 53 is input to the MCS/Mcod combination calculation unit 12a.

As described above, the MCS/Mcod combination calculation unit 12a selects a combination of the modulation parameters and the code multiplicity (MCS/Mcod combination) or a MCS/Mcod combination group in correspondence to the required transmission rate, and transmits the selected MCS/Mcod combination or the MCS/Mcod combination group, and a threshold of SIR to the adaptive modulation controller 11.

The adaptive modulation controller 11 compares the propagation path quality SIR and the threshold, selects an MCS number and a code multiplicity, and outputs the MCS number to the signal modulation unit 15 shown in FIG. 11 and the code multiplicity to the code multiplexer 16 shown in FIG. 11. Therefore, as described with reference to FIG. 12, in correspondence to the required transmission rate and the propagation path quality SIR, it is possible to optimize the combination of the adaptive modulation parameters and the adaptive code multiplicity.

FIG. 14 is a block diagram showing another example of the data modulation section of the transmission device 1 shown in FIG. 1, including the adaptive modulation controller 11 and the MCS/Mcod combination calculation unit 12a.

In FIG. 14, the required transmission rate 63 is calculated based on a throughput 61 required by a user, traffic information 62, and a reception throughput 64. The required throughput 61, the traffic information 62, and the reception throughput 64 correspond to the user requirement 19 in FIG. 1. The thus obtained required transmission rate 63 is input to the MCS/Mcod combination calculation unit 12a.

When transmitting data from the transmission device 1 (base station) to the reception device 2 (mobile station), even if the required transmission rate 63 is maintained, because of changes in the propagation path condition, sometimes the reception operation cannot be recovered normally at the reception device 2, resulting in decline of the reception throughput.

As a solution to this problem, the transmission device 1 compares the reception throughput 64 sent from the reception device 2 with the user-required throughput 61, increases the present value of the required transmission rate 63 when the reception throughput 64 does not satisfy the user-required throughput 61, and outputs the modified required transmission rate 63 to the MCS/Mcod combination calculation unit 12a. As a result, the MCS/Mcod combination is changed to increase to the reception throughput 64 to the level of the user-required throughput 61. Therefore, it is possible to receive data with the reception throughput 64 not lower than the user-required throughput 61.

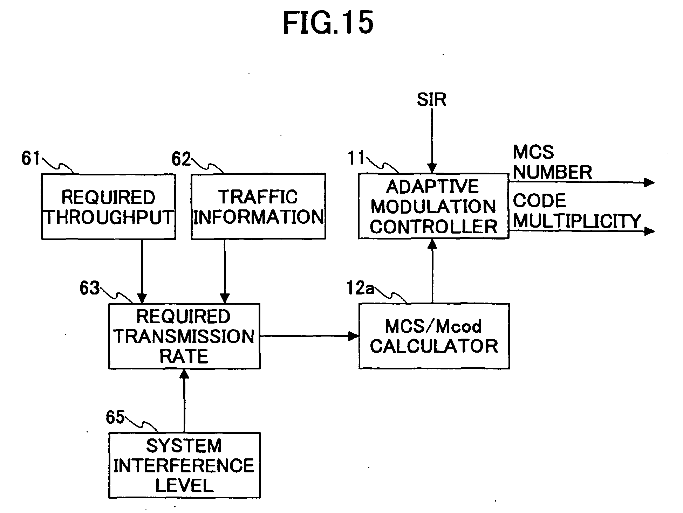

FIG. 15 is a block diagram showing another example of the data modulation section of the transmission device 1 shown in FIG. 1, including the adaptive modulation controller 11 and the MCS/Mcod combination calculation unit 12a shown in FIG. 11.

In FIG. 15, instead of the reception throughput 64 in FIG. 14, a system interference level 65 is used.

If the code multiplicity is increased in order to increase the transmission rate, the interference with adjacent cells becomes strong, and this increases the interference level of the entire system.

As a solution to this problem, the required transmission rate 63 is calculated based on the required throughput 61, the traffic information 62, and the system interference level 65 which is obtained by a device for controlling or monitoring the entire system. The controlling or monitoring device notifies the obtained transmission rate 63 to the transmission device 1 as an allowed transmission rate.

For example, the interference level between adjacent cells may be detected and used as the system interference level 65. In order to prevent an increase of the system interference level 65, the present value of the required transmission rate 63 is decreased, and is sent to the MCS/Mcod combination calculation unit 12a. Then, the MCS/Mcod combination calculation unit 12a determines an MCS/Mcod combination corresponding to the modified required transmission rate 63 and sends the MCS/Mcod combination to the adaptive modulation controller 11. By such a control operation, it is possible to suppress an increase of the system interference level, and improve the efficiency of the entire system. Although the user-required transmission rate (throughput) cannot be satisfied due to the above control operation, for example, this control is effective in a service which changes the transmission rate in correspondence to the propagation path condition such as the best-effort service.

The MCS/Mdoc combination group can also be determined by comprehensively considering the user-required transmission rate, the reception throughput, system information, and so on. By considering the transmission rates required by various users and the system information, it is possible to satisfy the transmission rates required by various users to a certain degree, and improve the operation efficiency of the whole system. In this case, the system can determine which quantity should be considered preferentially. Alternatively, the control may be performed according to service types. For example, it may be set that the user requirement has a higher priority in a real-time traffic, and the system efficiency has a higher priority in a non-real-time traffic.

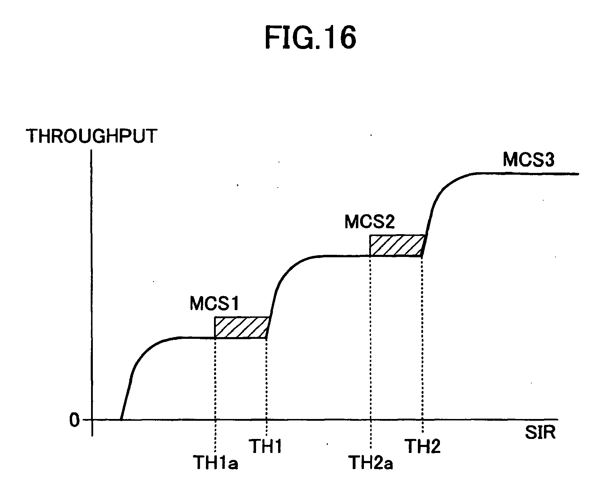

FIG. 16 shows a graph presenting an example of improving the throughput in accordance with SIR with the transmission power to be a constant.

In the examples shown in FIG. 5, FIG. 9, and FIG. 10, the transmission power is a constant even when the modulation parameters are changed, and by changing the code multiplicity, the transmission power can be increased by an amount corresponding to the code multiplicity.

In comparison, because there are regions having low SIR and regions having high SIR even with the same MCS/Mdoc combination, in the present example, a higher transmission rate may be set for transmission in regions having high SIR. For this purpose, the code multiplicity is increased with the transmission power to be a constant. In this case, the transmission power per code decreases, and the required SIR increases.

In FIG. 16, the abscissa represents SIR, and the ordinate represents the throughput. In this example, the code multiplicity is 4, the modulation parameters MCS1 are used below the threshold TH1, the modulation parameters MCS2 are used from the threshold TH1 to the threshold TH2, and the modulation parameters MCS3 are used when SIR is above the threshold TH2. Further, an auxiliary threshold TH1a is set for MCS1, and an auxiliary threshold TH2a is set for MCS2. The code multiplicity is increased when SIR exceeds the auxiliary threshold TH1a or the auxiliary threshold TH2a, with the transmission power being unchanged. Due to an increase of the code multiplicity, the throughput increases as shown by the hatched regions in FIG. 16.

Because the transmission power does not change even when the code multiplicity is increased when SIR is out of the region given by the auxiliary threshold, the transmission power per code decreases, and the required SIR increases. The auxiliary thresholds TH1a and TH2a are therefore set by considering this point. For example, in the case of a code multiplicity of four and the modulation parameters MCS1, when SIR exceeds the auxiliary threshold TH1a, the code multiplicity is set to be greater than four. The magnitude of the increase of the code multiplicity may be determined according to the system. Due to this, the throughput rises as shown by the hatched regions in FIG. 16 by an amount equaling the increase of the code multiplicity. When SIR increases more and exceeds the threshold TH1, the combination of modulation parameters MCS2 and the code multiplicity of four is used. When SIR further exceeds the auxiliary threshold TH2a, the code multiplicity is set to be greater than four, and the throughput increases as shown by the hatched regions in FIG. 16. In this way, it is possible to realize delicate improvement control.

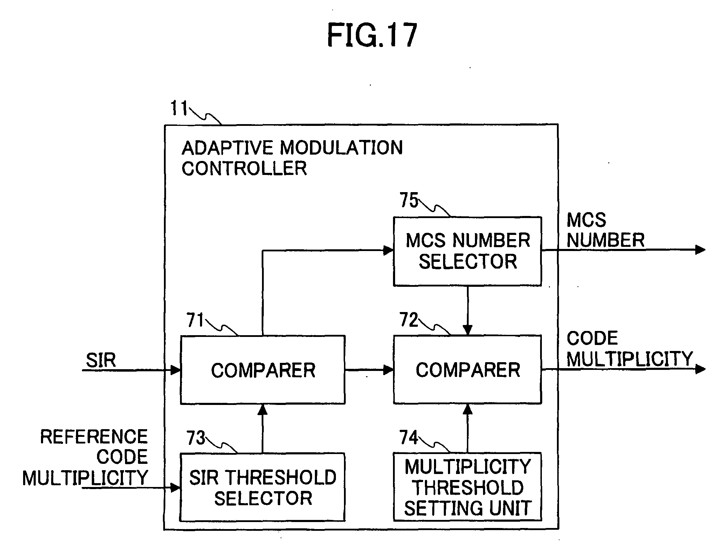

FIG. 17 is a block diagram showing another example of a configuration of the adaptive modulation controller 11 for changing the code multiplicity as shown in FIG. 16.

As shown in FIG. 17, the adaptive modulation controller 11 includes comparers 71 and 72, an SIR threshold selection unit 73, a multiplicity threshold setting unit 74, and an MCS number selection unit 75.

The propagation path quality indicated by SIR is input to the comparer 71, and a reference code multiplicity is input to the SIR threshold selection unit 73. The SIR threshold selection unit 73 selects a threshold, for example, as shown in FIG. 5 based on the reference code multiplicity, and outputs the threshold to the comparer 71.

The comparer 71 compares the threshold with SIR, and sends the comparison results to the comparer 72 and the MCS number selection unit 75.

The MCS number selection unit 75 selects an MCS number based on the comparison results between SIR and the threshold, outputs the MCS number to the comparer 72 and a not-illustrated signal modulation unit.

The comparer 72 compares a code multiplicity corresponding to the MCS number and the code multiplicity threshold output from the multiplicity threshold setting unit 74, and determines a code multiplicity.

If the comparison results from the comparer 75 indicate that SIR is above the auxiliary threshold TH1a and below the threshold TH2, with such results, the MCS number selection unit 75 selects and outputs the MCS number of the modulation parameters MCS1, and the multiplicity threshold setting unit 74 outputs a code multiplicity threshold of six, and consequently, the comparer 72 determines a code multiplicity threshold of six. As a result, the transmission rate can be increased. It should be noted that the transmission power is maintained to be a constant. In this case, it is possible to set the threshold for the present code multiplicity, and use the value of the possible increase as the threshold.

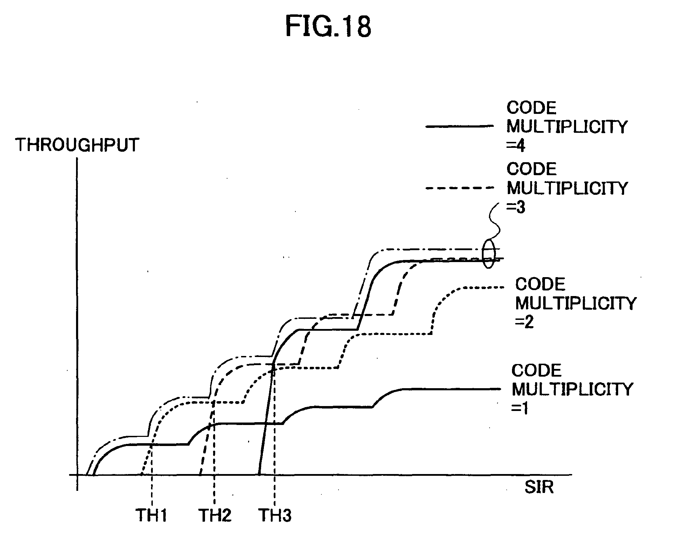

FIG. 18 shows graphs presenting an example of the characteristics of the throughput when the code multiplicity is changed with transmission power to be a constant. In FIG. 18, the abscissa represents SIR, and the ordinate represents the throughput.

FIG. 18 shows the throughputs corresponding to combinations of the modulation parameters MCS1 through MCS4 and the code multiplicity of one through the code multiplicity of four. Thresholds TH1, TH2, and TH3 are set, and when SIR is below the threshold TH1, the combination of the code multiplicity of one and the modulation parameters MCS1 are assigned. When SIR is above the threshold TH1 and below the threshold TH2, the combination of the code multiplicity of two and the modulation parameters MCS1 are assigned. When SIR is above the threshold TH2 and below the threshold TH3, the combination of the code multiplicity of three and the modulation parameters MCS2 are assigned, when SIR is above the threshold TH3, the combination of the code multiplicity of three or four and the modulation parameters MCS3 or MCS4 are assigned.

Therefore, by selecting MCS/Mdoc combinations, it is possible to increase the throughput with the transmission power level to be constant. It should be noted that under the condition of constant transmission power level, the throughput declines comparing with cases shown in FIG. 5, FIG. 9, and FIG. 10.

In this example, although the reference code multiplicity is assumed to be one, the reference code multiplicity may be changed according to the required transmission rate.

While the invention is described above with reference to specific embodiments chosen for purpose of illustration, it should be apparent that the invention is not limited to these embodiments, but numerous modifications could be made thereto by those skilled in the art without departing from the basic concept and scope of the invention.

For example, although the embodiments are described with the FDD system as an example, the present invention is also applicable to a TDD system.

Summarizing the effect of the present invention, as described above, a threshold is set to determine a region of a propagation path quality in which a combination of modulation parameters and a code multiplicity is applicable, and the most appropriate combination of the modulation parameters and the code multiplicity is selected based on the propagation path quality by considering a requirement of a user and a system condition. Therefore, even when the propagation path condition changes between a transmission device and a reception device, the radio resources can be effectively utilized, and the transmission rate required by the user can be satisfied.

This patent application is based on Japanese Priority Patent Application No. 2003-057954 filed on March 5, 2003.

## Claims

1. An adaptive modulation transmission system comprising a transmission device (1) and a reception device (2), wherein the adaptive modulation transmission system is adapted to change a modulation parameter according to a propagation path quality between the transmission device (1) and the reception device (2) and to change a code multiplicity according to an amount of a data to be transmitted from the transmission device (1) to the reception device, the code multiplicity representing a number of codes to be used for code multiplexing, wherein the transmission device (1) comprises:
a signal modulation unit (15) configured to modulate the data according to the modulation parameter;
a code multiplexing unit (16) configured to perform code multiplexing on the modulated data according to the code multiplicity; and
an adaptive modulation controller (11) configured to
arrange a plurality of combinations of the modulation parameter and the code multiplicity into a group, said combinations of the modulation parameter and the code multiplicity in the group being able to maintain a predetermined value of the amount of the data to be transmitted,
set a plurality of thresholds for switching between the combinations of the modulation parameter and the code multiplicity in the group,
compare the thresholds with a propagation path quality,
select one of the combinations of the modulation parameter and the code multiplicity in the group based on a result of the comparison, and
output the selected modulation parameter to the signal modulation unit.

2. The adaptive modulation transmission system as claimed in claim 1, wherein the reception device (2) comprises:
a measurement unit configured to measure the propagation path quality; and
a transmission unit configured to transmit the measured propagation path quality to the transmission device (1) for the comparison.

3. The adaptive modulation transmission system as claimed in claim 1, wherein the plurality of thresholds comprises at least one threshold assigned according to the code multiplicity.

4. An adaptive modulation transmission method for changing a modulation parameter according to a propagation path quality between a transmission device (1) and a reception device (2) and changing a code multiplicity according to an amount of a data to be transmitted from the transmission device (1) to the reception device, the code multiplicity representing a number of codes to be used for code multiplexing, said adaptive modulation transmission method comprising the steps of:
arranging a plurality of combinations of the modulation parameter and the code multiplicity into a group, said combinations of the modulation parameter and the code multiplicity in the group being capable of maintaining a predetermined value of the amount of the data to be transmitted;
setting a plurality of thresholds for switching between the combinations of the modulation parameter and the code multiplicity in the group;
comparing the thresholds with a propagation path quality;
selecting one of the combination of the modulation parameter and the code multiplicity in the group based on a result of the comparison; and
modulating the data according to the selected modulation parameter and performing code multiplexing on the modulated data according to the selected code multiplicity.

5. The adaptive modulation transmission method as claimed in claim 4, further comprising the steps of:
measuring, by the reception device, the propagation path quality; and
transmitting, by the reception device, the measured propagation path quality to the transmission device (1) for the comparison.

6. The adaptive modulation transmission method as claimed in claim 4 or 5, wherein the plurality of thresholds comprises at least one threshold assigned according to the code multiplicity.

7. The adaptive modulation transmission method as claimed in any of claims 4 to 6, wherein each combination of the modulation parameter and the code multiplicity correspond to the propagation path quality and a throughput.

8. The adaptive modulation transmission method as claimed in any of claims 4 to 7, wherein the plurality of thresholds comprise a plurality of thresholds of the propagation path quality for defining regions of the propagation path quality to which a combination of the modulation parameter and the code multiplicity are applicable.

9. The adaptive modulation transmission method as claimed in claim 4, further comprising the steps of:
arranging a plurality of combinations of the modulation parameter and the code multiplicity into a plurality of groups;
selecting one of the groups in correspondence to a predetermined value of the amount of the data to be transmitted;
comparing a threshold for said one of the groups and the propagation path quality; and
selecting one of the combinations of the modulation parameter and the code multiplicity belonging to said one of the groups based on a result of the comparison.

10. The adaptive modulation transmission method as claimed in claim 4, further comprising the steps of:
arranging a plurality of combinations of the modulation parameter and the code multiplicity into a plurality of groups;
selecting one of the groups in correspondence to a predetermined value of an interference level or a predetermined value of the amount of the data to be transmitted;
comparing a threshold for said one of the groups and the propagation path quality; and
selecting one of the combinations of the modulation parameter and the code multiplicity belonging to said one of the groups based on a result of the comparison.

11. The adaptive modulation transmission method as claimed in claim 4, further comprising the steps of:
setting a threshold of the propagation path quality for defining a region of the propagation path quality to which a combination of the modulation parameter and the code multiplicity is applicable;
setting an auxiliary threshold of the propagation path quality in the region related to said threshold; and
increasing the code multiplicity for code multiplexing without changing a transmission power level when the auxiliary threshold exceeds the propagation path quality.

12. The adaptive modulation transmission method as claimed in claim 4, further comprising the steps of:
setting a group of a plurality of combinations of the modulation parameter and the code multiplicity, said group of the combinations of the modulation parameter and the code multiplicity resulting in a maximum of a throughput;
setting a threshold for defining a region of the propagation path quality in which the combinations of the modulation parameter and the code multiplicity belonging to the group are applicable;
comparing the threshold and the propagation path quality; and
selecting one of the combinations of the modulation parameter and the code multiplicity in the group based on a result of the comparison while keeping a transmission power level constant.

13. A transmission device (1) adapted to change a modulation parameter according to a propagation path quality between the transmission device (1) and a reception device (2) and to change a code multiplicity according to an amount of a data to be transmitted from the transmission device (1) to the reception device, the code multiplicity representing a number of codes to be used for code multiplexing, the transmission device (1) comprising:
a signal modulation unit (15) configured to modulate the data according to the modulation parameter;
a code multiplexing unit (16) configured to perform code multiplexing on the modulated data according to the code multiplicity; and
an adaptive modulation controller (11) configured to
arrange a plurality of combinations of the modulation parameter and the code multiplicity into a group, said combinations of the modulation parameter and the code multiplicity in the group being able to maintain a predetermined value of the amount of the data to be transmitted,
set a plurality of thresholds for switching between the combinations of the modulation parameter and the code multiplicity in the group,
compare the thresholds with the propagation path quality,
select one of the combinations of the modulation parameter and the code multiplicity in the group based on a result of the comparison, and
output the selected modulation parameter to the signal modulation unit.

14. The transmission device (1) as claimed in claim 13, wherein the plurality of thresholds comprises at least one threshold assigned according to the code multiplicity.

15. The transmission device (1) as claimed in claim 13 or 14, wherein the plurality of thresholds comprise a plurality of thresholds of the propagation path quality for defining regions of the propagation path quality to which a combination of the modulation parameter and the code multiplicity are applicable.

## Patentansprüche

1. Adaptiv-Modulations-Sendesystem, welches eine Sendevorrichtung (1) und eine Empfangsvorrichtung (2) umfasst, wobei das Adaptiv-Modulations-Sendesystem angepasst ist, einen Modulationsparameter gemäß einer Ausbreitungspfadqualität zwischen der Sendevorrichtung (1) und der Empfangsvorrichtung (2) zu ändern und eine Code-Multiplizität gemäß einer Größe von Daten, welche von der Sendevorrichtung (1) zu der Empfangsvorrichtung gesendet werden sollen, zu ändern, wobei die Code-Multiplizität eine Zahl von Codes darstellt, welche für Code-Multiplexing genutzt werden sollen, wobei die Sendevorrichtung (1) umfasst:
eine Signalmodulationseinheit (15), welche konfiguriert ist, die Daten gemäß dem Modulationsparameter zu modulieren;
eine Code-Multiplexeinheit (16), welche konfiguriert ist, Code-Multiplexing auf den modulierten Daten durchzuführen, gemäß der Code-Multiplizität; und
eine Adaptiv-Modulationssteuerung (11), welche konfiguriert ist,
eine Vielzahl an Kombinationen des Modulationsparameters und der Code-Multiplizität in eine Gruppe zu ordnen, wobei Kombinationen des Modulationsparameters und der Code-Multiplizität in der Gruppe in der Lage sind, einen vorbestimmten Wert der Größe an Daten, welche gesendet werden sollen, zu erhalten,
eine Vielzahl an Schwellwerten zum Wechseln zwischen den Kombinationen des Modulationsparameters und der Code-Multiplizität in der Gruppe zu setzen,
die Schwellwerte und eine Ausbreitungspfad-Qualität zu vergleichen,
eine der Kombinationen des Modulationsparameters und der Code-Multiplizität in der Gruppe zu wählen, basierend auf dem Resultat des Vergleichs, und
den gewählten Modulationsparameter an die Signalmodulationseinheit auszugeben.

2. Adaptiv-Modulations-Sendesystem nach Anspruch 1, wobei die Empfangsvorrichtung (2) umfasst:
eine Messeinheit, welche konfiguriert ist, die Ausbreitungspfad-Qualität zu messen; und
eine Sendeeinheit, welche konfiguriert ist, die gemessene Ausbreitungspfad-Qualität an die Sendevorrichtung (1) für den Vergleich zu senden.

3. Adaptiv-Modulations-Sendesystem nach Anspruch 1, wobei die Vielzahl an Schwellwerten wenigstens einen Schwellwert umfasst, welcher gemäß der Code-Multiplizität zugewiesen wird.

4. Adaptiv-Modulations-Sendeverfahren zum Ändern eines Modulationsparameters gemäß einer Ausbreitungspfad-Qualität zwischen einer Sendevorrichtung (1) und einer Empfangsvorrichtung (2) und Ändern eines Code-Multiplizität gemäß einer Größe an Daten, welche von der Sendevorrichtung (1) zu der Empfangsvorrichtung gesendet werden sollen, wobei die Code-Multiplizität eine Zahl an Codes darstellt, welche für Multiplexen genutzt werden sollen, wobei das Adaptiv-Modulations-Sendeverfahren die Schritte umfasst:
Anordnen einer Vielzahl an Kombinationen des Modulationsparameters und der Code-Multiplizität in eine Gruppe, wobei die Kombinationen des Modulationsparameters und der Code-Multiplizität in der Gruppe in der Lage sind, einen vorbestimmten Wert der Größe der Daten, welche gesendet werden sollen, zu erhalten;
Setzen einer Vielzahl an Schwellwerten zum Wechseln zwischen den Kombinationen des Modulationsparameters und der Code-Multiplizität in der Gruppe;
Vergleichen der Schwellwerte und einer Ausbreitungspfad-Qualität;
Wählen einer der Kombination des Modulationsparameters und der Code-Multiplizität in der Gruppe basierend auf einem Resultat des Vergleichs; und
Modulieren der Daten gemäß dem gewählten Modulationsparameter und Durchführen von Code-Multiplexen auf den modulierten Daten gemäß der gewählten Code-Multiplizität.

5. Adaptiv-Modulations-Sendeverfahren nach Anspruch 4, welches ferner die Schritte umfasst:
Messen, an der Empfangsvorrichtung, der Ausbreitungspfad-Qualität; und
Senden, an der Empfangsvorrichtung, der gemessenen Ausbreitungspfad-Qualität an die Sendevorrichtung (1) für den Vergleich.

6. Adaptiv-Modulations-Sendeverfahren nach Anspruch 4 oder 5, wobei die Vielzahl an Schwellwerten wenigstens einen Schwellwert umfasst, welcher gemäß der Code-Multiplizität zugewiesen wird.

7. Adaptiv-Modulations-Sendeverfahren nach einem der Ansprüche 4 bis 6, wobei jede Kombination des Modulationsparameters und der Code-Multiplizität der Ausbreitungspfad-Qualität und einem Durchsatz entspricht.

8. Adaptiv-Modulations-Sendeverfahren nach einem der Ansprüche 4 bis 7, wobei die Vielzahl an Schwellwerten eine Vielzahl an Schwellwerten der Ausbreitungspfad-Qualität umfasst, um Bereiche der Ausbreitungspfad-Qualität zu definieren, für welche eine Kombination des Modulationsparameters und der Code-Multiplizität anwendbar sind.

9. Adaptiv-Modulations-Sendeverfahren nach Anspruch 4, welches ferner die Schritte umfasst:
Anordnen einer Vielzahl an Kombinationen des Modulationsparameters und der Code-Multiplizität in eine Vielzahl an Gruppen;
Wählen einer der Gruppen entsprechend einem vorbestimmten Wert der Größe der Daten, welche gesendet werden sollen;
Vergleichen eines Schwellwerts für die eine der Gruppen und der Ausbreitungspfad-Qualität; und
Wählen einer der Kombinationen des Modulationsparameters und der Code-Multiplizität, welche zu der einen der Gruppen gehören, basierend auf einem Resultat des Vergleichs.

10. Adaptiv-Modulations-Sendeverfahren nach Anspruch 4, welches ferner die Schritte umfasst:
Anordnen einer Vielzahl an Kombinationen des Modulationsparameters und der Code-Multiplizität in eine Vielzahl an Gruppen;
Wählen einer der Gruppen entsprechend einem vorbestimmten Wert eines Störungspegels oder einem vorbestimmten Wert der Größe an Daten, welche gesendet werden sollen;
Vergleichen eines Schwellwerts für die eine der Gruppen und der Ausbreitungspfad-Qualität; und
Wählen einer der Kombinationen des Modulationsparameters und der Code-Multiplizität, welche zu der einen der Gruppen gehören, basierend auf einem Resultat des Vergleichs.

11. Adaptiv-Modulations-Sendeverfahren nach Anspruch 4, welches ferner die Schritte umfasst:
Setzen eines Schwellwerts der Ausbreitungspfad-Qualität zum Definieren eines Bereichs der Ausbreitungspfad-Qualität, für welchen eine Kombination des Modulationsparameters und der Code-Multiplizität anwendbar ist;
Setzen eines Hilfs-Schwellwerts der Ausbreitungspfad-Qualität in dem Bereich, welcher mit dem Schwellwert in Beziehung steht; und
Erhöhen der Code-Multiplizität für Code-Multiplexen ohne Ändern eines Sendeleistungspegels, wenn der Hilfs-Schwellwert die Ausbreitungspfad-Qualität überschreitet.

12. Adaptiv-Modulations-Sendeverfahren nach Anspruch 4, welches ferner die Schritte umfasst:
Setzen einer Gruppe von einer Vielzahl an Kombinationen des Modulationsparameters und der Code-Multiplizität, wobei die Gruppe der Kombinationen des Modulationsparameters und der Code-Multiplizität ein Maximum an Durchsatz ergibt;
Setzen eines Schwellwerts zum Definieren eines Bereichs der Ausbreitungspfad-Qualität, in welchem die Kombinationen des Modulationsparameters und der Code-Multiplizität, welche zu der Gruppe gehören, anwendbar sind;
Vergleichen des Schwellwerts und der Ausbreitungspfad-Qualität; und
Wählen einer der Kombinationen des Modulationsparameters und der Code-Multiplizität in der Gruppe, basierend auf einem Resultat des Vergleichs, während ein Sendeleistungspegel konstant gehalten wird.

13. Sendevorrichtung (1), welche angepasst ist, einen Modulationsparameter gemäß einer Ausbreitungspfad-Qualität zwischen der Sendevorrichtung (1) und einer Empfangsvorrichtung (2) zu ändern und eine Code-Multiplizität gemäß einer Größe an Daten, welche von der Sendevorrichtung (1) an die Empfangsvorrichtung gesendet werden sollen, zu ändern, wobei die Code-Multiplizität eine Zahl an Codes darstellt, welche für Code-Multiplexen genutzt werden sollen, wobei die Sendevorrichtung (1) umfasst:
eine Signalmodulationseinheit (15), welche konfiguriert ist, die Daten gemäß dem Modulationsparameter zu modulieren;
eine Code-Multiplex-Einheit (16), welche konfiguriert ist, Code-Multiplexen auf den modulierten Daten gemäß der Code-Multiplizität durchzuführen; und
eine Adaptiv-Modulationssteuerung (11), welche konfiguriert ist
eine Vielzahl an Kombinationen des Modulationsparameters und der Code-Multiplizität in eine Gruppe anzuordnen, wobei die Kombinationen des Modulationsparameters und der Code-Multiplizität in der Gruppe in der Lage sind, einen vorbestimmten Wert der Größe der Daten, welche gesendet werden sollen, zu erhalten,
eine Vielzahl an Schwellwerten zum Wechseln zwischen den Kombinationen des Modulationsparameters und der Code-Multiplizität in der Gruppe zu setzen,
die Schwellwerte und die Ausbreitungspfad-Qualität zu vergleichen,
eine der Kombinationen des Modulationsparameters und der Code-Multiplizität in der Gruppe zu wählen, basierend auf einem Resultat des Vergleichs, und
den gewählten Modulationsparameter an die Signalmodulationseinheit auszugeben.

14. Sendevorrichtung (1) nach Anspruch 13, wobei die Vielzahl an Schwellwerten wenigstens einen Schwellwert umfasst, welcher gemäß der Code-Multiplizität zugewiesen wird.

15. Sendevorrichtung (1) nach Anspruch 13 oder 14, wobei die Vielzahl an Schwellwerten eine Vielzahl an Schwellwerten der Ausbreitungspfad-Qualität umfasst, um Bereiche der Ausbreitungspfad-Qualität zu definieren, für welche eine Kombination des Modulationsparameters und der Code-Multiplizität anwendbar sind.

## Revendications

1. Système d'émission à modulation adaptative comprenant un dispositif d'émission (1) et un dispositif de réception (2), dans lequel le système d'émission à modulation adaptative est adapté pour modifier un paramètre de modulation en fonction d'une qualité de trajet de propagation entre le dispositif d'émission (1) et le dispositif de réception (2) et pour modifier une multitude de codes en fonction d'une quantité de données à émettre du dispositif d'émission (1) vers le dispositif de réception, la multitude de codes représentant un nombre de codes à utiliser pour un multiplexage de codes, dans lequel le dispositif d'émission (1) comprend :
une unité de modulation de signal (15) configurée pour moduler les données en fonction du paramètre de modulation ;
une unité de multiplexage de codes (16) configurée pour appliquer un multiplexage de codes aux données modulées en fonction de la multitude de codes ; et
un contrôleur de modulation adaptative (11) configuré pour
agencer une pluralité de combinaisons du paramètre de modulation et de la multitude de codes en un groupe, lesdites combinaisons du paramètre de modulation et de la multitude de codes dans le groupe étant capables de maintenir une valeur prédéterminée de la quantité des données à émettre,
fixer une pluralité de seuils pour une commutation entre les combinaisons du paramètre de modulation et de la multitude de codes dans le groupe,
comparer les seuils avec une qualité de trajet de propagation,
sélectionner l'une des combinaisons du paramètre de modulation et de la multitude de codes dans le groupe sur la base d'un résultat de la comparaison, et
délivrer le paramètre de modulation sélectionné à l'unité de modulation de signal.

2. Système d'émission à modulation adaptative selon la revendication 1, dans lequel le dispositif de réception (2) comprend :
une unité de mesure configurée pour mesurer la qualité de trajet de propagation ; et
une unité d'émission configurée pour émettre la qualité de trajet de propagation mesurée vers le dispositif d'émission (1) pour la comparaison.

3. Système d'émission à modulation adaptative selon la revendication 1, dans lequel la pluralité de seuils comprend au moins un seuil attribué en fonction de la multitude de codes.

4. Procédé d'émission à modulation adaptative pour modifier un paramètre de modulation en fonction d'une qualité de trajet de propagation entre un dispositif d'émission (1) et un dispositif de réception (2) et modifier une multitude de codes en fonction d'une quantité de données à émettre du dispositif d'émission (1) vers le dispositif de réception, la multitude de codes représentant un nombre de codes à utiliser pour un multiplexage de codes, ledit procédé d'émission à modulation adaptative comprenant les étapes consistant à :
agencer une pluralité de combinaisons du paramètre de modulation et de la multitude de codes en un groupe, lesdites combinaisons du paramètre de modulation et de la multitude de codes dans le groupe étant capables de maintenir une valeur prédéterminée de la quantité des données à émettre ;
fixer une pluralité de seuils pour une commutation entre les combinaisons du paramètre de modulation et de la multitude de codes dans le groupe ;
comparer les seuils avec une qualité de trajet de propagation ;
sélectionner l'une des combinaisons du paramètre de modulation et de la multitude de codes dans le groupe sur la base d'un résultat de la comparaison ; et
moduler les données en fonction du paramètre de modulation sélectionné et appliquer un multiplexage de codes aux données modulées en fonction de la multitude de codes sélectionnés.

5. Procédé d'émission à modulation adaptative selon la revendication 4, comprenant en outre les étapes consistant à :
mesurer, par le dispositif de réception, la qualité de trajet de propagation ; et
émettre, par le dispositif de réception, la qualité de trajet de propagation mesurée vers le dispositif d'émission (1) pour la comparaison.

6. Procédé d'émission à modulation adaptative selon la revendication 4 ou 5, dans lequel la pluralité de seuils comprend au moins un seuil attribué en fonction de la multitude de codes.

7. Procédé d'émission à modulation adaptative selon l'une quelconque des revendications 4 à 6, dans lequel chaque combinaison du paramètre de modulation et de la multitude de codes correspond à la qualité de trajet de propagation et à un débit.

8. Procédé d'émission à modulation adaptative selon l'une quelconque des revendications 4 à 7, dans lequel la pluralité de seuils comprend une pluralité de seuils de la qualité de trajet de propagation pour définir des régions de la qualité de trajet de propagation auxquelles une combinaison du paramètre de modulation et de la multitude de codes est applicable.

9. Procédé d'émission à modulation adaptative selon la revendication 4, comprenant en outre les étapes consistant à :
agencer une pluralité de combinaisons du paramètre de modulation et de la multitude de codes en une pluralité de groupes ;
sélectionner l'un des groupes en correspondance avec une valeur prédéterminée de la quantité des données à émettre ;
comparer un seuil pour ledit un des groupes et la qualité de trajet de propagation ;
sélectionner l'une des combinaisons du paramètre de modulation et de la multitude de codes appartenant audit un des groupes sur la base d'un résultat de la comparaison.

10. Procédé d'émission à modulation adaptative selon la revendication 4, comprenant en outre les étapes consistant à :
agencer une pluralité de combinaisons du paramètre de modulation et de la multitude de codes en une pluralité de groupes ;
sélectionner l'un des groupes en correspondance avec une valeur prédéterminée d'un niveau d'interférence ou une valeur prédéterminée de la quantité des données à émettre ;
comparer un seuil pour ledit un des groupes et la qualité de trajet de propagation ; et
sélectionner l'une des combinaisons du paramètre de modulation et de la multitude de codes appartenant audit un des groupes sur la base d'un résultat de la comparaison.

11. Procédé d'émission à modulation adaptative selon la revendication 4, comprenant en outre les étapes consistant à :
fixer un seuil de la qualité de trajet de propagation pour définir une région de la qualité de trajet de propagation à laquelle une combinaison du paramètre de modulation et de la multitude de codes est applicable ;
fixer un seuil auxiliaire de la qualité de trajet de propagation dans la région associée audit seuil ; et
augmenter la multitude de codes pour un multiplexage de codes sans modifier un niveau de puissance d'émission lorsque le seuil auxiliaire dépasse la qualité de trajet de propagation.

12. Procédé d'émission à modulation adaptative selon la revendication 4, comprenant en outre les étapes consistant à :
fixer un groupe d'une pluralité de combinaisons du paramètre de modulation et de la multitude de codes, ledit groupe de combinaisons du paramètre de modulation et de la multitude de codes résultant en un maximum d'un débit ;
fixer un seuil pour définir une région de la qualité de trajet de propagation dans laquelle les combinaisons du paramètre de modulation et de la multitude de codes appartenant au groupe sont applicables ;
comparer le seuil et la qualité de trajet de propagation ; et
sélectionner l'une des combinaisons du paramètre de modulation et de la multitude de codes dans le groupe sur la base d'un résultat de la comparaison tout en maintenant un niveau de puissance d'émission constant.

13. Dispositif d'émission (1) adapté pour modifier un paramètre de modulation en fonction d'une qualité de trajet de propagation entre le dispositif d'émission (1) et un dispositif de réception (2) et pour modifier une multitude de codes en fonction d'une quantité de données à émettre du dispositif d'émission (1) vers le dispositif de réception, la multitude de codes représentant un nombre de codes à utiliser pour un multiplexage de codes, le dispositif d'émission (1) comprenant :
une unité de modulation de signal (15) configurée pour moduler les données en fonction du paramètre de modulation ;
une unité de multiplexage de codes (16) configurée pour appliquer un multiplexage de codes aux données modulées en fonction de la multitude de codes ; et
un contrôleur de modulation adaptative (11) configuré pour
agencer une pluralité de combinaisons du paramètre de modulation et de la multitude de codes en un groupe, lesdites combinaisons du paramètre de modulation et de la multitude de codes dans le groupe étant capables de maintenir une valeur prédéterminée de la quantité des données à émettre,
fixer une pluralité de seuils pour une commutation entre les combinaisons du paramètre de modulation et de la multitude de codes dans le groupe,
comparer les seuils avec la qualité de trajet de propagation,
sélectionner l'une des combinaisons du paramètre de modulation et de la multitude de codes dans le groupe sur la base d'un résultat de la comparaison, et
délivrer le paramètre de modulation sélectionné à l'unité de modulation de signal.

14. Dispositif d'émission (1) selon la revendication 13, dans lequel la pluralité de seuils comprend au moins un seuil attribué en fonction de la multitude de codes.

15. Dispositif d'émission (1) selon la revendication 13 ou 14, dans lequel la pluralité de seuils comprend une pluralité de seuils de la qualité de trajet de propagation pour définir des régions de la qualité de trajet de propagation auxquelles une combinaison du paramètre de modulation et de la multitude de codes est applicable.
